# EUROPEAN PATENT APPLICATION

(11) **EP 4 184 915 A1**
(43) Date of publication of application: **24.05.2023**
(21) Application number: 21842654.2
(22) Date of filing: 12.07.2021
(51) Int. Cl.: H04N 13/183

(54) **METHOD AND APPARATUS FOR IMPLEMENTING TARGET OBJECT POSITIONING, AND DISPLAY COMPONENT**

(30) Priority: 15.07.2020 CN 202010681260
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Zacco GmbH
(86) International application number: PCT/CN2021/105672
(87) International publication number: WO 2022/012455

(57) **Abstract**

The present application relates to the technical field of optics, and discloses a method for implementing target object positioning, including: obtaining a target object position of a target object; and providing the target object position to a display controller without involving an AP. The method for implementing target object positioning provided by the present application is capable of avoiding occupying a large amount of resources of the AP due to the processing for the target object position as much as possible. The present application further discloses an apparatus for implementing target object positioning, a display device, a computer-readable storage medium, and a computer program product.

## Description

The present application claims priority to the Chinese Patent Application with an application number of 202010681260.5 and a title of "Method and Apparatus for Implementing Target Object Positioning and Display Device", filed to China National Intellectual Property Administration on July, 15th, 2020, the disclosures of which are hereby incorporated by reference.

### TECHNICAL FIELD

The present application relates to the technical field of optics, and for example, relates to a method and an apparatus for implementing target object positioning and a display device.

### BACKGROUND

At present, when a target object is positioned and displayed, it is usually necessary to transmit a target object position to an Application Processor (AP) for processing.

In a process of implementing embodiments of the present disclosure, at least the following problems are found in related technologies:
A large amount of resources of the AP will be occupied due to processing for the target object position.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a method and an apparatus for implementing target object positioning, a display device, a computer-readable storage medium, and a computer program product, to solve a technical problem that a large amount of resources of an AP will be occupied due to processing for a target object position.

The method for implementing target object positioning provided by embodiments of the present disclosure includes:
obtaining a target object position of a target object;
providing the target object position to a display controller without involving an Application Processor (AP).

In some embodiments, providing the target object position to a display controller without involving an AP may include:
providing the target object position to the display controller through a target object position transmission channel without involving the AP.

In some embodiments, the method further includes determining the target object position transmission channel.

In some embodiments, determining a target object position transmission channel may include:
taking a preset transmission channel without involving the AP as the target object position transmission channel; or
selecting a transmission channel without involving the AP from at least two transmission channels, and taking the selected transmission channel without involving the AP as the target object position transmission channel; or
excluding transmission channels involving the AP from the target object position transmission channel.

In some embodiments, the display controller may be a timing controller (T-con).

In some embodiments, providing the target object position may include:
for the display controller, transmitting the target object position actively or passively.

In some embodiments, transmitting the target object position actively may include: transmitting the target object position in real time or periodically. Optionally, transmitting the target object position passively may include: transmitting the target object position based on a received request.

In some embodiments, transmitting the target object position may include:
directly or indirectly transmitting the target object position to the display controller.

In some embodiments, obtaining a target object position of a target object may include:
obtaining a target object image of a target object, and obtaining a target object position of the target object based on the target object image.

In some embodiments, obtaining a target object image of a target object may include:
obtaining the target object image by a displacement sensor;
where the target object includes eyes of a user, and the target object image includes eye space information of the eyes.

In some embodiments, the eye space information may include eye plane position information;
obtaining the target object position of a target object may include:
obtaining eye depth information according to eye plane position information included in a target object image, so as to obtain spatial coordinates of eyes.

In some embodiments, the method further includes removing the target object image.

In some embodiments, removing the target object image may include:
transferring a target object image in a displacement sensor to an entity other than the displacement sensor, so that there is no target object image in the displacement sensor;
   or
deleting a target object image in a displacement sensor.

In some embodiments, transferring a target object image to an entity may include:
transferring a target object image to an entity capable of deleting the target object image.

In some embodiments, removing the target object image may include:
after a target object position of a target object is obtained based on a target object image, immediately removing the target object image; or
immediately removing the target object image after a target object position is provided; or
after a target object position of a target object is obtained based on a target object image or a target object position is provided, and when removal conditions are satisfied, removing the target object image.

In some embodiments, a target object image may include a 2D image or a 3D image.

The apparatus for implementing target object positioning provided by embodiments of the present disclosure includes a processor and a memory storing program instructions, and the processor is configured to execute the method for implementing target object positioning when executing a program instruction.

The display device provided by embodiments of the present disclosure includes: a displacement sensor and the apparatus for implementing target object positioning;
where the displacement sensor is configured to execute the following operations under the control of a processor:
obtaining a target object position of a target object;
providing the target object position to a display controller without involving an AP.

In some embodiments, the display device may further include a display controller, configured to receive a target object position and perform 3D rendering on pixels of the display device accordingly.

In some embodiments, the number of the displacement sensor may be one or more than one.

In some embodiments, the displacement sensor may be a camera.

The computer-readable storage medium provided by embodiments of the present disclosure stores computer-executable instructions, configured to execute the method for implementing target object positioning.

The computer program product provided by embodiments of the present disclosure includes a computer program stored on a computer-readable storage medium; and the computer program includes program instructions which, when executed by a computer, cause a computer to execute the method for implementing target object positioning.

The method and apparatus for implementing target object positioning, the display device, the computer-readable storage medium, and the computer program product provided by embodiments of the present disclosure may achieve the following technical effect of
avoiding occupying a large amount of resources of an AP due to the processing for a target object position as much as possible.

The above general description and the following description are exemplary and explanatory only, and are not intended to limit the present application.

### DESCRIPTION OF DRAWINGS

At least one embodiment is illustrated by the corresponding drawings, and the illustrations and drawings do not limit the embodiments. Elements having the same reference numerals in the drawings are shown as similar elements, and the drawings are not intended to limit the scale, where:
Fig. 1 is a flow chart of implementing target object positioning provided by an embodiment of the present disclosure;
Fig. 2 is a flow chart of obtaining a target object position provided by an embodiment of the present disclosure;
Figs. 3A, 3B and 3C are flow charts of removing a target object image provided by an embodiment of the present disclosure;
Fig. 4 is a schematic diagram of an apparatus for implementing target object positioning provided by an embodiment of the present disclosure;
Fig. 5 is a structural schematic diagram of a display device provided by an embodiment of the present disclosure;
Fig. 6 is another structural schematic diagram of a display device provided by an embodiment of the present disclosure; and
Fig. 7 is another structural schematic diagram of a display device provided by an embodiment of the present disclosure.

### Reference numerals:

100: apparatus for implementing target object positioning; 110: processor; 120: memory; 130: communication interface; 140: bus; 200: display device; 210: displacement sensor; 220: display controller.

### DETAILED DESCRIPTION

To understand features and technical contents of embodiments of the present disclosure in more detail, implementation of the embodiments of the present disclosure is described in detail below with reference to accompanying drawings; and the accompanying drawings are used for reference only, rather than limiting the embodiments of the present disclosure. In following technical description, for the convenience of explanation, a thorough understanding of the disclosed embodiments is provided through more details. However, at least one embodiment may be implemented without the details. In other cases, to simplify the accompanying drawings, well-known structures and apparatuses may be shown simplistically.

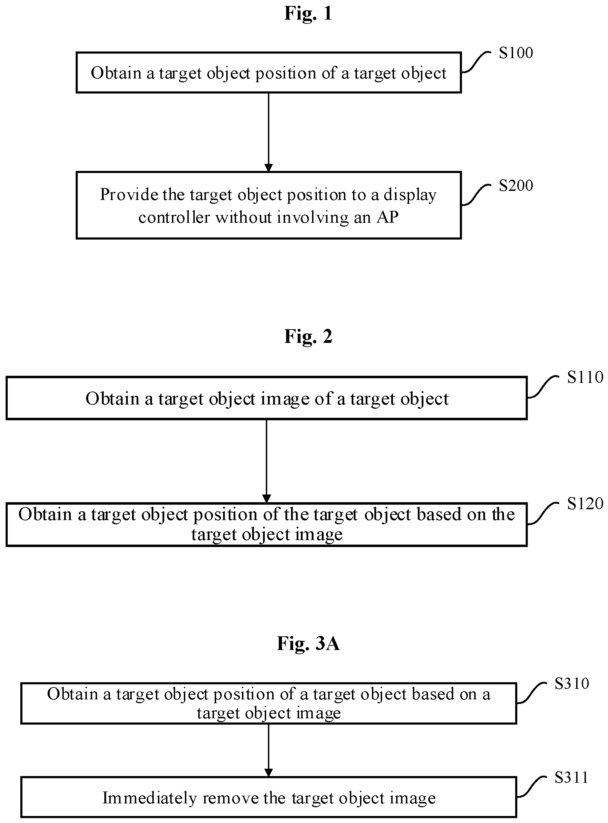

Referring to Fig. 1, an embodiment of the present disclosure provides a method for implementing target object positioning, including:
S 100: obtaining a target object position of a target object;
S200: providing the target object position to a display controller without involving an AP.

In this way, after a target object position of a target object is obtained, the target object position may be provided for a display controller without involving an AP, thereby avoiding a problem that a large amount of resources of the AP are occupied due to the processing for the target object position as much as possible.

In some embodiments, a target object position of a target object may be obtained by a displacement sensor.

In some embodiments, providing the target object position to a display controller without involving an AP may include:
providing the target object position to the display controller through a target object position transmission channel without involving the AP.

In some embodiments, the target object position transmission channel may be a wired channel, and may also be a wireless channel.

In some embodiments, the method further includes determining the target object position transmission channel.

In some embodiments, determining a target object position transmission channel may include:
taking a preset transmission channel without involving the AP as the target object position transmission channel; or
selecting a transmission channel without involving the AP from at least two transmission channels, and taking the selected transmission channel without involving the AP as the target object position transmission channel; or
excluding transmission channels involving the AP from the target object position transmission channel.

In some embodiments, the transmission channel without involving an AP is capable of being connected (wired connection or wireless connection) to a display controller. When there are two or more such transmission channels, one of them may be determined as a target object position transmission channel. Optionally, a target object position transmission channel may be determined based on actual conditions of transmission channels such as load, accuracy and robustness, for example, a transmission channel with the lowest load in more than two of the above transmission channels is determined as a target object position transmission channel; or, a transmission channel with the highest accuracy in more than two of the above transmission channels is determined as a target object position transmission channel; or, a transmission channel with the highest robustness in more than two of the above transmission channels is determined as a target object position transmission channel. Optionally, any one of more than two of the above transmission channels may also be determined as a target object position transmission channel.

In some embodiments, when the determined target object position transmission channel is not suitable for transmitting a target object position due to failure, parameter (e.g., load, accuracy and robustness) changes and other conditions, a target object position transmission channel capable of transmitting the target object position may be re-determined.

In some embodiments, the display controller may be a T-con.

In some embodiments, the display controller may also be a device, other than T-con, capable of controlling display.

In some embodiments, providing the target object position may include:
for the display controller, transmitting the target object position actively or passively.

In some embodiments, actively or passively transmitting a target object position against a demand side of other target object positions may also be included. Optionally, the demand side of target object position may be a server, an AP, a router, a user terminal, etc.

In some embodiments, transmitting the target object position actively may include: transmitting the target object position in real time or periodically.

In some embodiments, in the case of transmitting a target object position in real time, the target object position may be transmitted in real time after the target object position is obtained.

In some embodiments, in the case of transmitting a target object position periodically, a transmitting period of transmitting the target object position may be considered according to actual conditions such as application scene, usage time of a displacement sensor and workload. Optionally, the transmitting period may be set in advance; for example, the transmitting period is set to a specific duration such as 1 second, 1 minute and 1 hour, or a specific duration range of greater than or equal to 1 second and less than or equal to 1 hour.

In some embodiments, a target object position may also be transmitted when transmitting conditions of the target object position are satisfied.

In some embodiments, in the case of transmitting a target object position when transmitting conditions of the target object position are satisfied, the transmitting conditions of the target object position may be considered according to actual conditions such as application scene, usage time of a displacement sensor and workload. Optionally, the transmitting conditions may be set as follows: transmitting the target object position when the number of the obtained target object positions reaches specific values such as 10, 50 and 80, or a specific value range of greater than or equal to 10 and less than or equal to 80; or, the transmitting conditions may be set as follows: transmitting the target object position before a displacement sensor is turned off; for example, transmitting the target object position when the displacement sensor receives a turn-off signal, or after the displacement sensor receives the turn-off signal and before the turn-off is completed.

In some embodiments, passively transmitting a target object position may include: transmitting the target object position based on a received request.

In some embodiments, in the case of passively transmitting a target object position, the target object position may be transmitted when a request for the target object position is received or at a specific time after the request for the target object position is received. Optionally, the request for the target object position may be a read request for reading the target object position; or, it may also be other requests involving or needing to use the target object position, for example, a request A is not used to directly read the target object position, but is used to trigger a target object positioning operation; and then, the displacement sensor can transmit the target object position after receiving the request A. Optionally, the above request may exist in a form recognizable by computer instructions.

In some embodiments, transmitting the target object position may include:
directly or indirectly transmitting the target object position to the display controller.

In some embodiments, in the case of directly transmitting a target object position to a demand side such as a display controller, a displacement sensor may be directly connected (e.g., wired connection or wireless connection) with the demand side, so as to directly transmit the target object position to the demand side.

In some embodiments, in the case of indirectly transmitting a target object position to a demand side such as a display controller, a displacement sensor may be indirectly connected with the demand side, for example, an intermediate node (e.g., a server, an AP and a router) may be connected (e.g., wired connection or wireless connection) between the displacement sensor and the demand side, and the displacement sensor may indirectly transmit the target object position to the demand side through the intermediate node.

Referring to Fig. 2, in some embodiments, obtaining a target object position of a target object may include:
S 110: obtaining a target object image of a target object;
S 120: obtaining a target object position of the target object based on the target object image.

In some embodiments, obtaining a target object image of a target object may include:
obtaining the target object image by a displacement sensor;
where the target object may include eyes of a user, and the target object image may include eye space information of the eyes.

In some embodiments, a target object image may also be obtained by a device other than a displacement sensor.

In some embodiments, the eye space information may include eye plane position information;
obtaining the target object position of a target object may include:
obtaining eye depth information according to eye plane position information included in a target object image, so as to obtain spatial coordinates of eyes.

In some embodiments, eye plane position information obtained by a displacement sensor includes eye depth information, so that the eye depth information may be obtained according to the eye plane position information, and the eye depth information may be converted into spatial coordinates of eyes of a user.

In some embodiments, the method further includes removing the target object image.

In some embodiments, removing a target object image may include:
transferring a target object image in a displacement sensor to an entity other than the displacement sensor, so that there is no target object image in the displacement sensor;
   or
deleting a target object image in a displacement sensor.

In some embodiments, when a target object image in a displacement sensor is transferred to an entity other than the displacement sensor, original data of the target object image in the displacement sensor may be transferred to the entity other than the displacement sensor, so that there is no target object image in the displacement sensor. Optionally, a copy of a target object image in a displacement sensor may be transferred to an entity other than the displacement sensor, and original data of the target object image in the displacement sensor may be deleted, so that there is no target object image in the displacement sensor. Optionally, whether it is original data or a copy of a target object image, when the target object image is transferred to an entity other than a displacement sensor, the target object image may be transmitted to the entity other than the displacement sensor in a wired or wireless way. Optionally, the entity other than the displacement sensor may be an entity needing caching and other subsequent processing of a target object image, such as a cache and an image processor. Optionally, after caching and other subsequent processing of a target object image, the entity other than the displacement sensor may also delete the target object image.

In some embodiments, transferring a target object image to an entity may include:
transferring a target object image to an entity capable of deleting the target object image.

In some embodiments, the entity other than the displacement sensor may be an entity capable of deleting a target object image, such as an image processor and a file processor special for deleting the target object image. Optionally, before deleting a target object image, the entity other than the displacement sensor may cache the target object image.

In some embodiments, the entity may be a hardware entity, such as a physical device capable of processing a target object image. Optionally, the entity may also be a software entity, such as logic software capable of processing a target object image.

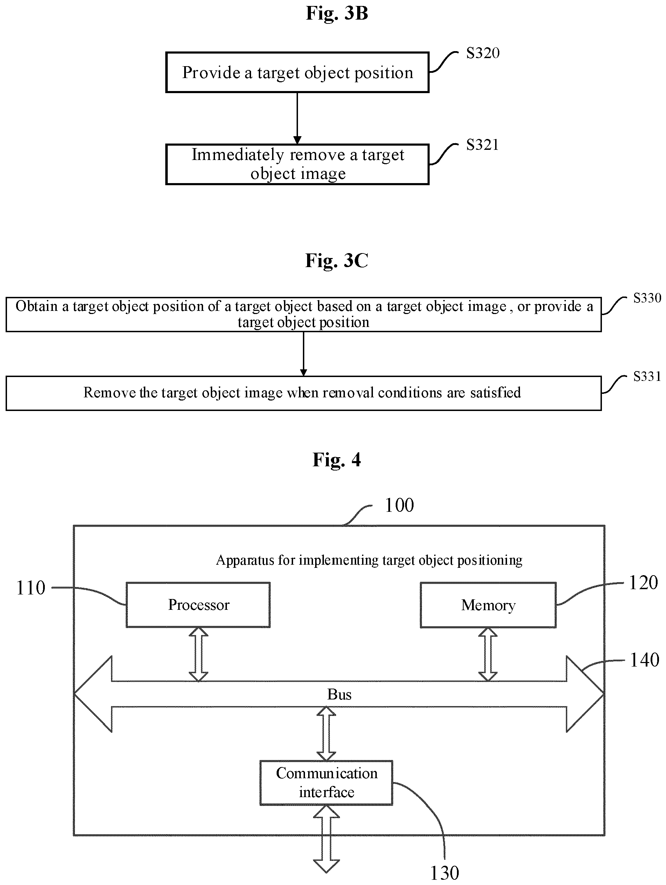

Referring to Figs. 3A, 3B and 3C, in some embodiments, removing a target object image may include:
after a target object position of a target object is obtained based on a target object image, immediately removing the target object image; or

immediately removing a target object image after a target object position is provided; or
after a target object position of a target object is obtained based on a target object image or a target object position is provided, and when removal conditions are satisfied, removing the target object image.

In some embodiments, referring to Fig. 3A, removing a target object image may include:
S310: obtaining a target object position of a target object based on a target object image;
S311: immediately removing the target object image.

As shown in Fig. 3A, a target object image may be removed immediately after a target object position is obtained.

In some embodiments, referring to Fig. 3B, removing a target object image may include:
S320: providing a target object position;
S321: immediately removing the target object image.

As shown in Fig. 3B, a target object image may be removed immediately after a target object position is provided.

In some embodiments, referring to Fig. 3C, removing a target object image may include:
S330: obtaining a target object position of a target object based on a target object image, or providing a target object position;
S331: removing the target object image when removal conditions are satisfied.

As shown in Fig. 3C, after a target object position is obtained or a target object position is provided, and when removal conditions are satisfied, a target object image is removed.

In some embodiments, removal conditions may be considered according to actual conditions such as application scene, usage time of a displacement sensor and workload. Optionally, removal conditions may be set as follows: removing a target object image when workload of a displacement sensor reaches a specific value such as 20%, 50% and 80% or a specific value range of greater than or equal to 20% and less than or equal to 80%.

In some embodiments, a target object image may include a 2D image or a 3D image.

Referring to Fig. 4, an embodiment of the present disclosure provides an apparatus 100 for implementing target object positioning, including a processor 110 and a memory 120 storing program instructions, where the processor 110 is configured to perform the method for implementing target object positioning when executing a program instruction.

In some embodiments, an apparatus for implementing target object positioning shown in Fig. 4 may include:
a processor 110 and a memory 120, and may further include a communication interface 130 and a bus 140; where the processor 110, the communication interface 130, and the memory 120 may communicate with one another through the bus 140. The communication interface 130 may be used for information transmission. The processor 110 may call logic instructions in the memory 120, to execute the method for implementing target object positioning in the above embodiments.

In addition, the logic instructions in the memory 120 may be implemented in a form of software functional units, and may be stored in a computer-readable storage medium when being sold or used as an independent product.

The memory 120, as a computer-readable storage medium, may be used for storing software programs and computer-executable programs, such as program instructions/modules corresponding to the methods in embodiments of the present disclosure. The processor 110 performs function application and data processing by running the program instructions/modules stored in the memory 120, i.e., implements the method for implementing target object positioning in embodiments of the above method.

The memory 120 may include a program storage region and a data storage region, where the program storage region may store an operating system and application programs required by at least one function; the data storage region may store data and the like created according to use of a terminal device. In addition, the memory 120 may include a high-speed Random Access Memory (RAM), and may further include a Nonvolatile Memory (NVM).

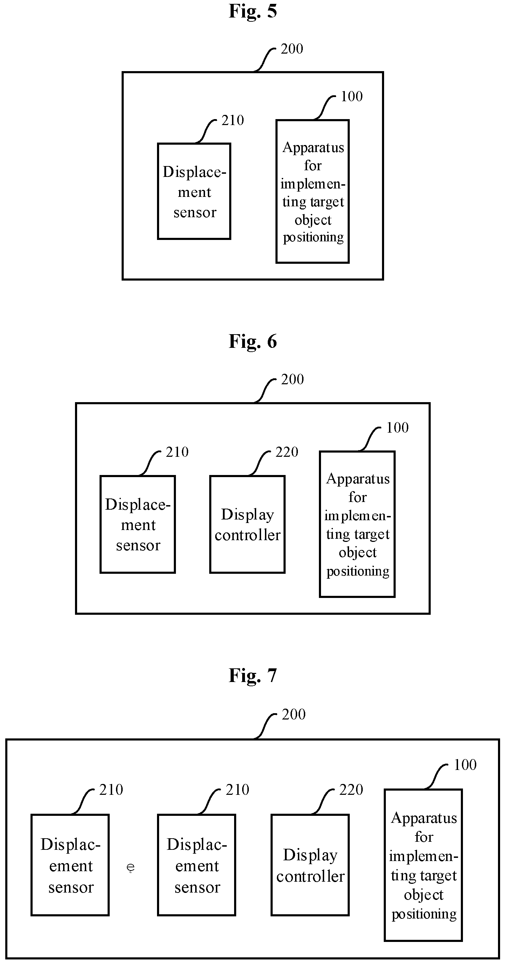

Referring to Fig. 5, an embodiment of the present disclosure provides a display device 200, including: a displacement sensor 210 and the apparatus 100 for implementing target object positioning; where the displacement sensor 210 is configured to execute the following operations under the control of the processor 110:
obtaining a target object position of a target object;
providing the target object position to a display controller without involving an AP.

In some embodiments, the above operations capable of being performed by the displacement sensor 210 may be referred to the aforementioned corresponding descriptions, for example, including Figs. 1-4 and corresponding technical descriptions, and are not repeated here.

Referring to Fig. 6, in some embodiments, a display device 200 may further include a display controller 220, configured to receive a target object position and perform 3D rendering on pixels of the display device 200 accordingly, for example, assigning pixels for forming a left-eye image and pixels for forming a right-eye image according to a target object position, and performing 3D image display based on the assigned pixels.

In some embodiments, the display controller 220 may be a T-con.

Referring to Fig. 7, in some embodiments, the number of the displacement sensor 210 may be one or more, such as one, two, three or more.

In some embodiments, the displacement sensor 210 may be a camera. Optionally, the displacement sensor 210 may also be radar or other devices capable of obtaining a target object image.

In some embodiments, a target object image including eye space information may be obtained by at least two displacement sensors 210, and the eye space information includes eye plane position information. Optionally, after at least two corresponding target object images obtained by at least two displacement sensors 210 with different shooting angles are composited, eye plane position information included in the obtained target object image includes eye depth information, so that the eye depth information may be obtained according to the eye plane position information included in the target object image, and the eye depth information may be converted into spatial coordinates of eyes of a user.

In some embodiments, a display device 200 may further include other components for supporting normal operation of the display device 200, such as at least one of a communication interface, a framework, a control circuit, etc.

In some embodiments, the eyes may include eyeballs, such as eyeballs of both eyes of a user.

In some embodiments, a displacement sensor 210 may also determine a viewing angle/position of a user by determining visual axes of eyeballs and other ways.

The method and the apparatus for implementing target object positioning and the display device provided by embodiments of the present disclosure are capable of avoiding occupying a large amount of resources of an AP due to the processing for a target object position as much as possible.

Embodiments of the present disclosure provide a computer-readable storage medium, storing computer-executable instructions; and the computer-executable instructions are configured to execute the method for implementing target object positioning.

Embodiments of the present disclosure provide a computer program product, including a computer program stored on a computer-readable storage medium; and the computer program includes program instructions which, when executed by a computer, cause the computer to execute the method for implementing target object positioning.

The computer-readable storage medium may be a transient computer-readable storage medium, and may also be a non-transient computer-readable storage medium.

The computer-readable storage medium and the computer program product provided by embodiments of the present disclosure are capable of avoiding occupying a large amount of resources of an AP due to the processing for a target object position as much as possible.

Technical solutions of embodiments of the present disclosure may be reflected in the form of a software product, which is stored in a storage medium and comprises at least one instruction for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a Read-Only Memory (ROM), a Random Access Memory (RAM), a diskette or an optical disk, and may also be a transient storage medium.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims. As used in the illustration of the embodiments and the claims, unless clearly indicated in the context, the singular forms "a", "an" and "the" are also intended to include the plural forms. Similarly, the term "and/or" as used in the present application is meant to include any and all possible combinations of one or more of the associated listings. In addition, when used in the present application, the term "comprise" and its variations "comprises" and/or "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

In the accompanying drawings, width, length, thickness and the like of structures such as elements or layers may be exaggerated for clarity and description. When a structure such as an element or layer is referred to as being "arranged" (or "mounted", "laid", "attached", "coated" and the like) "above" or "on" another element or layer, the structure such as the element or layer may be directly "arranged" "above" or "on" another element or layer, or a structure such as an intermediate element or layer exists between the element or layer and the another element or layer and even is partially embedded in the another element or layer.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains at least one executable instruction for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, can be implemented by special hardware-based systems that perform specified functions or actions, or implemented by combinations of special hardware and computer instructions.

## Claims

1. A method for implementing target object positioning, comprising:
obtaining a target object position of a target object;
providing the target object position to a display controller without involving an Application Processor, AP.

2. The method according to claim 1, wherein providing the target object position to a display controller without involving an AP comprises:
providing the target object position to the display controller through a target object position transmission channel without involving the AP.

3. The method according to claim 2, further comprising: determining the target object position transmission channel.

4. The method according to claim 3, wherein determining the target object position transmission channel comprises:
taking a preset transmission channel without involving the AP as the target object position transmission channel; or
selecting a transmission channel without involving the AP from at least two transmission channels, and taking the selected transmission channel without involving the AP as the target object position transmission channel; or
excluding transmission channels involving the AP from the target object position transmission channel.

5. The method according to claim 1, wherein the display controller is a timing controller, T-con.

6. The method according to any one of claims 1-5, wherein providing the target object position comprises:
for the display controller, transmitting the target object position actively or passively.

7. The method according to claim 6, wherein
transmitting the target object position actively comprises: transmitting the target object position in real time or periodically;
or,
transmitting the target object position passively comprises: transmitting the target object position based on a received request.

8. The method according to claim 6, wherein transmitting the target object position comprises:
directly or indirectly transmitting the target object position to the display controller.

9. The method according to any one of claims 1-8, wherein obtaining a target object position of a target object comprises:
obtaining a target object image of a target object, and obtaining a target object position of the target object based on the target object image.

10. The method according to claim 9, wherein obtaining a target object image of a target object comprises:
obtaining the target object image by a displacement sensor;
wherein the target object comprises eyes of a user, and the target object image comprises eye space information of the eyes.

11. The method according to claim 10, wherein the eye space information comprises eye plane position information;
obtaining a target object position of the target object comprises:
obtaining eye depth information according to eye plane position information comprised in the target object image, so as to obtain spatial coordinates of the eyes.

12. The method according to claim 9, further comprising: removing the target object image.

13. The method according to claim 12, wherein removing the target object image comprises:
transferring the target object image in the displacement sensor to an entity other than the displacement sensor, so that there is no the target object image in the displacement sensor;
or
deleting the target object image in the displacement sensor.

14. The method according to claim 13, wherein transferring the target object image to the entity comprises:
transferring the target object image to the entity capable of deleting the target object image.

15. The method according to claim 13, wherein removing the target object image comprises:
after a target object position of the target object is obtained based on the target object image, immediately removing the target object image; or
immediately removing the target object image after the target object position is provided; or
after a target object position of the target object is obtained based on the target object image or the target object position is provided, and when removal conditions are satisfied, removing the target object image.

16. The method according to claim 9, wherein the target object image comprises a 2D image or a 3D image.

17. An apparatus for implementing target object positioning, comprising a processor and a memory storing program instructions, wherein the processor is configured to execute the method of any one of claims 1-16 when executing the program instructions.

18. A display device, comprising: a displacement sensor and the apparatus of claim 17; wherein the displacement sensor is configured to execute the following operations under the control of the processor:
obtaining a target object position of a target object;
providing the target object position to a display controller without involving an AP.

19. The display device according to claim 18, further comprising a display controller, configured to receive the target object position and perform 3D rendering on pixels of the display device accordingly.

20. The display device according to claim 18 or 19, wherein number of the displacement sensor is one or more than one.

21. The display device according to claim 20, wherein the displacement sensor is a camera.

22. A computer-readable storage medium, storing computer-executable instructions, wherein the computer-executable instructions are configured to execute the method of any one of claims 1-16.

23. A computer program product, comprising a computer program stored on a computer-readable storage medium, wherein the computer program comprises program instructions which, when executed by a computer, cause the computer to execute the method of any one of claims 1-16.
